# EUROPÄISCHE PATENTSCHRIFT

(11) **EP 0 602 107 B1**
(45) Veröffentlichungstag und Bekanntmachung des Hinweises auf die Patenterteilung: **19.03.1997**
(21) Anmeldenummer: 92918421.6
(22) Anmeldetag: 25.08.1992
(51) Int. Cl.: H04N 3/26

(54) **SCHALTUNG ZUM ERZEUGEN EINER DYNAMISCHEN FOKUSSIERSPANNUNG IN EINEM FERNSEHGERÄT**
CIRCUIT FOR PRODUCING A DYNAMIC FOCUSSING VOLTAGE IN A TELEVISION SET
CIRCUIT SERVANT A PRODUIRE UNE TENSION DYNAMIQUE DE FOCALISATION DANS UN APPAREIL DE TELEVISION

(30) Priorität: 04.09.1991 DE 4129335
(43) Veröffentlichungstag der Anmeldung: 22.06.1994
(73) Patentinhaber: DEUTSCHE THOMSON-BRANDT GMBH, 78048 Villingen-Schwenningen (DE)
(72) Erfinder: ELGERT, Achim, D-7737 Bad Dürrheim (DE)
(86) Internationale Anmeldenummer: EP9201949
(87) Internationale Veröffentlichungsnummer: WO9305610

(56) Entgegenhaltungen:
- US-A- 4 683 405
- US-A- 4 916 365
- PATENT ABSTRACTS OF JAPAN vol. 10, no. 332 (E-453)12. November 1986 & JP,A,61 137 415

## Beschreibung

Die Erfindung geht aus von einer Schaltung gemäß dem Oberbegriff des Anspruchs 1. Eine derartige Schaltung zur dynamischen Fokussierung einer Bildröhre ist beschrieben in "Grundig Technische Informationen", Juli 1958, Seite 17 - 18.

Bei Bildröhren mit größeren Bildschirmen wie z.B. 16:9 ist außer der üblichen statischen Fokussierung zusätzlich eine dynamische Fokussierung vorgesehen. Der Fokuselektrode der Bildröhre wird dabei eine Gleichspannung von etwa 7 - 8 kV zugeführt, der über eine Wechselspannungskopplung eine parabelförmige Fokussierspannung überlagert wird. Das gilt sowohl für die horizontale als auch für die vertikale Ablenkrichtung. Bei Betriebsarten mit unterschiedlichem Bildformat und unterschiedlicher Ablenkamplitude mit Überschreibung des Bildschirms besteht die Forderung, daß der Spitze-Spitze-Wert der parabelförmigen Fokussierspannung konstant bleibt, damit die Fokussierspannung bezogen auf den Ablenkort unverändert bleibt. Die Konstanthaltung des Spitze-Spitze-Wertes der Parabel beruht darauf, daß eine unnötige Aussteuerung der Parabel vermieden wird, da eine höhere Parabelspannung in der Überschreibungsphase der sichtbaren Bildamplitude liegt, und zum anderen während dieser Überschreibungsphase eine Korrektur der Parabelspannung vorgenommen werden kann.

Damit die wirksame Fokussierspannung bei allen Betriebsarten bezogen auf den Ablenkort gleich bleibt, muß wegen der Wechselspannungskopplung der arithmetische Mittelwert der Parabelspannung für jedes größere Bildformat sowie für das Standardbildformat konstant sein. Das ist aber ohne weiteres nicht der Fall, da eine Parabelspannung, die sich nur über einen Teil der Ablenkperiode erstreckt, einen geringeren arithmetischen Mittelwert hat.

Der Erfindung liegt die Aufgabe zugrunde, eine Schaltung zu schaffen, bei der die dynamische Fokussierspannung bei allen Betriebsarten trotz unterschiedlicher Dauer dieser Spannung innerhalb der Ablenkperiode immer denselben arithmetischen Mittelwert hat.

Diese Aufgabe wird durch die im Anspruch 1 angegebene Erfindung gelöst. Vorteilhafte Weiterbildungen der Erfindung sind in den Unteransprüche angegeben.

Es ist auch eine Schaltung für eine dynamische Fokussierung bekannt (US-A-4 683 405), bei der eine parabelförmige Spannung mit der Horizontalfrequenz jeweils beim Auftreten eines Synchronsignals erzeugt wird. Die parabelförmige Spannung wird dabei aus einer sägezahnförmigen Spannung gewonnen, die einen ansteigenden Teil, einen abfallenden Teil und einen flach verlaufenden Teil aufweist, wobei nur die Länge des flachen Teils der sägezahnförmigen Spannung sich ändert, wenn sich die Frequenz der Synchronimpulse ändert.

Es ist auch eine Schaltung für einen Fernsehempfänger bekannt (US-A-4 916 365), bei der außer der Ablenkung durch die Ablenkspulen eine parabelförmige horizontalfrequente Spannung und eine parabelförmige vertikalfrequente Spannung einer Steuerelektrode der Bildröhre zugeführt werden, wobei beide parabelförmigen Spannungen jeweils vom Mittelpunkt des Bildschirms zu dem Bildschirmkanten hin zunehmen. Diese zusätzliche Helligkeitsmodulation dient dazu, Helligkeitsunterschiede zwischen dem Mittelpunkt des Bildschirms und den Rändern des Bildschirms durch den unterschiedlichen Auftreffwinkel des Elektronenstrahls auf dem Bildschirm auszugleichen.

Bei der erfindungsgemäßen Lösung wird also sinngemäß die Überschreibungszeit des Elektronenstrahls, während der eine Fokussierung nicht notwendig ist und auch keine Fokussierspannung wirksam wird, dazu ausgenutzt, der Fokussierspannung einen Gleichspannungsimpuls zuzufügen. Dieser Gleichspannungsimpuls hat zwar keine Wirkung als dynamische Fokussierspannung. Er sorgt aber dafür, daß die parabelförmige Korrekturspannung zusammen mit dem Gleichspannungsimpuls bei allen Betriebsarten immer den gleichen arithmetischen Mittelwert hat. Eine Beeinflussung der eigentlichen parabelförmigen Korrekturspannung während der Bildwiedergabe ist dabei nicht erforderlich.

Die Erfindung wird im folgenden anhand der Zeichnung an Ausführungsbeispielen erläutert. Darin zeigen
- Fig. 1: parabelförmige Fokussierspannungen für zwei Betriebsarten,
- Fig. 2: die erfindungsgemäße Korrektur des arithmetischen Mittelwertes,
- Fig. 3: eine Schaltung zur Korrektur des arithmetischen Mittelwertes gemäß Fig. 2 für eine vertikalfrequente dynamische Korrektur und
- Fig. 4: ein praktisch erprobtes Ausführungsbeispiel der Schaltung nach Fig. 3.

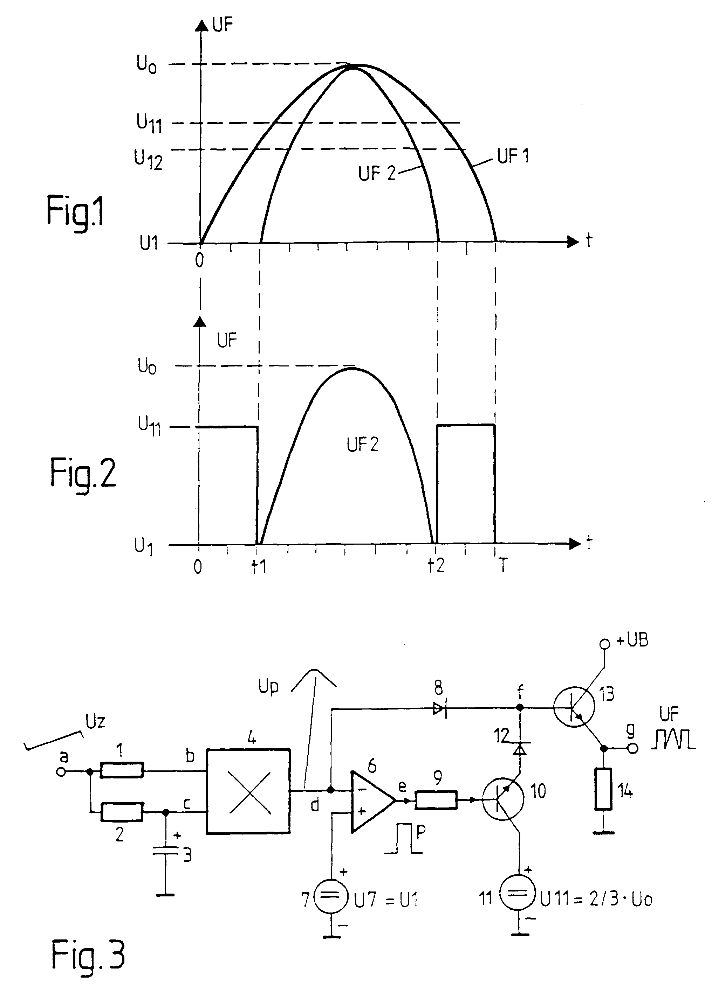

Fig. 1 zeigt eine Fokussierspannung UF1 für normale Bildwiedergabe ohne Überschreibung. UF1 hat einen parabelförmigen Verlauf während der vertikalen Ablenkperiode von 0 - T. UF1 hat den arithmetischen Mittelwert U11. Bei einer Wechselspannungskopplung auf die Fokuselektrode wird also zwangsläufig dieser Mittelwert U11 auf die an der Fokuselektrode stehende Gleichspannung gelegt. Die statische Fokussierspannung einer Fokuselektrode ist in Fig 1. mit U1 bezeichnet. Fig. 1 zeigt weiterhin eine Fokussierspannung UF2 für ein anderes Bildformat mit Überschreibung des Elektronenstrahls jeweils von 0 - t1 und t2 - T. Die parabelförmige Fokussierspannung UF2 ist somit über einen verkürzten Zeitraum von t1 - t2 wirksam. Da die Amplitude gleich bleibt, verringert sich der arithmetische Mittelwert auf U12. Da U12 durch die Wechselspannungskopplung an der Fokuselektrode wieder auf den Wert der dortigen Gleichspannung fällt, würde sich die Amplitudenlage von UF2 relativ zu der Gleichspannung ändern. Die an der Fokuselektrode wirksame Fokussierspannung hätte dann bezogen auf den Ablenkort nicht mehr die richtigen Werte.

Gemäß Fig. 2 wird nun während der Überschreibungszeiten von 0 - t1 und von t2 - T der Wert von UF2 auf den Gleichspannungswert U11 geschaltet. Der arithmetische Mittelwert, der sich in Fig. 2 aus den Gleichspannungen von 0 - t1 und t2-T und der dynamischen Spannung UF2 von t1 - t2 ergibt, hat dann denselben Wert wie der arithmetische Mittelwert der Fokussierspannung UF1 in Fig. 1. Die Gleichspannungsimpulse während der Überschreibungszeiten von 0 - t1 und t2 - T korrigieren also den an sich zu kleinen arithmetischen Mittelwert U12, den die Spannung UF2 von t1 - t2 allein hätte.

In Fig. 3 gelangt eine vertikalfrequente sägezahnförmige Spannung Uz von der Klemme a einmal unverändert über den Widerstand 1 auf den Eingang b des Multiplizierers 4. Uz gelangt außerdem über das Siebglied mit dem Widerstand 2 und dem Kondensator 3 auf den Eingang c des Multiplizierers 4 und erzeugt dort eine vom Mittelwert von Uz abhängige Gleichspannung. Der Multiplizierer 4 arbeitet mit zwei Stromeingängen und erzeugt an seinem Ausgang d eine vertikalfrequente parabelförmige Fokussierspannung Up. Es sei jetzt angenommen, daß der Betriebsfall mit UF2 gemäß Fig. 2 mit den genannten Überschreibungszeiten vorliegt. Die parabelförmige Spannung Up vom Ausgang d gelangt auf den "-"-Eingang des Komparators 6, an dessen "+"-Eingang eine konstante Spannung U7 mit dem Wert von U1 von der Spannungsquelle 7 angelegt ist. Von t1 - t2, also während der eigentlichen Bildwiedergabe, ist Up oder UF2 größer als U1. Der Komparator 6 spricht daher nicht an. Up gelangt über die leitende Diode 8 auf den Basisanschluß f des Transistors 13, der zusammen mit dem Widerstand 14 als Emitterfolger arbeitet. UF2 gelangt während dieser Zeit unverändert auf den Ausgang g.

Von 0 - t1 und von t2 - T unterschreitet UF2 den Wert von U1. Der Komparator 6 spricht an und erzeugt an seinem Ausgang einen positiven Impuls P. P gelangt über den Widerstand 9 auf die Basis des Transistors 10, dessen Kollektor an die Spannungsquelle 11 mit dem Spannungswert U11=2/3*Uo angeschlossen ist. P steuert den Transistor 10 leitend. Dadurch wird der Punkt f gemäß Fig. 2 auf die Spannung U11 geschaltet, abgesehen von den Flußspannungen des Transistors 10 und der Diode 12. Die positive Spannung U11 am Punkt f sperrt die zur Entkopplung dienende Diode 8, so daß der Anteil von Up von 0 - t1 und t2 - T abgeschnitten wird und der erwünschte Verlauf gemäß Fig. 2 entsteht.

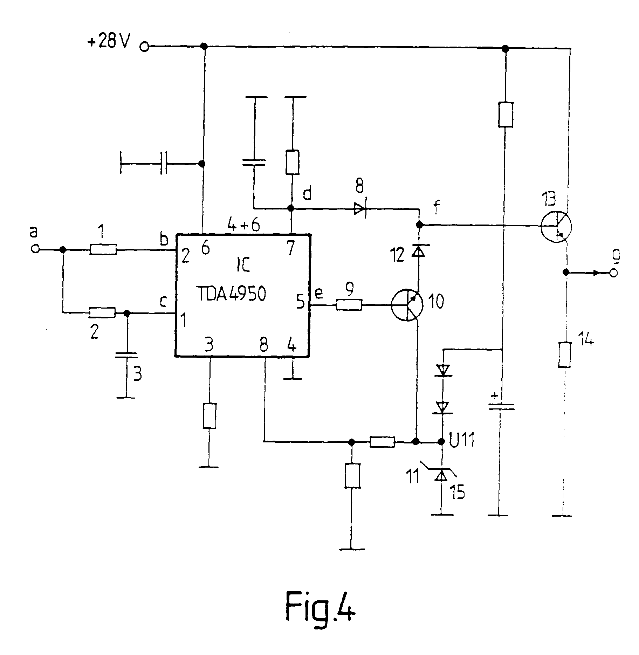

In der praktisch erprobten Schaltung nach Fig. 4 finden sich die wesentlichen Bauteile von Fig. 3 wieder. Der Multiplizierer 4 und der Komparator 6 sind durch das dargestellte IC vom Typ TDA4950 gebildet. Die Referenzspannungsquelle 7 von Fig. 3 ist in dem IC enthalten. Die Referenzspannungsquelle 11 von Fig. 3 wird durch die Zenerdiode 15 gebildet. Von der Klemme g wird die Fokussierspannung UF gemäß Fig. 2, 3 abgenommen und über eine Wechselspannungskopplung in Form eines Kondensators der Fokuselektrode der Bildröhre zugeführt und der dort stehenden statischen Fokussierspannung überlagert.

Bei dem praktisch erprobten Ausführungsbeispiel gemäß Fig. 4 hatten die wesentlichen Bauteile folgende Werte.

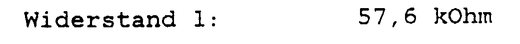

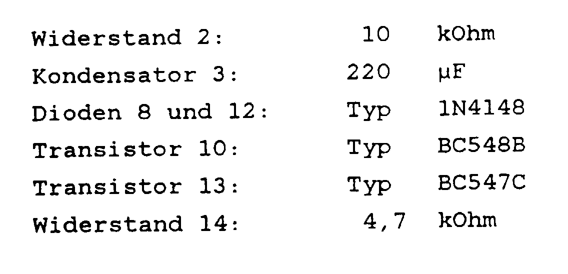

## Patentansprüche

1. Schaltung zum Erzeugen einer dynamischen Fokussierspannung (UF) in einem Fernsehgerät mit einer von der normalen Betriebsart abweichenden Betriebsart, bei der die für die Bildwiedergabe wirksame Ablenkperiode für die Zeilenablenkung und/oder Vertikalablenkung geändert ist und der Elektronenstrahl während sogenannter Überschreibungszeiten über die Bildschirmkanten hinaus abgelenkt wird, wobei die Fokussierspannung bei allen Betriebsarten die gleiche Spitze-Spitze-Amplitude aufweist und während der Überschreibungszeiten wegen seiner Lage außerhalb des Bildschirms nicht wirksam ist, **gekennzeichnet** durch eine Einrichtung (4,6,10) zur Schaltung der Fokussierspannung während der Überschreibungszeiten (0 - t1; t2 - T) auf einen so bemessenen Gleichspannungswert (U11), daß der arithmetische Mittelwert der Fokussierspannung (UF) bei allen Betriebsarten gleich ist.

2. Schaltung nach Anspruch 1, **dadurch gekennzeichnet,** daß die Fokussierspannung (UF) und eine Referenzspannung (U7) mit dem unteren Wert der Fokussierspannung an die Eingänge eines Komparators (6) angelegt sind, dessen Ausgangsspannung einen Schalter (10) zum Umschalten auf den Gleichspannungswert (U11) betätigt.

3. Schaltung nach Anspruch 1, **dadurch gekennzeichnet,** daß eine Sägezahnspannung (Uz) mit der Ablenkperiode (T) einmal direkt und einmal über einen ihren Gleichspannungswert liefernden Tiefpaß (2, 3) an die Eingänge (b, c) eines Multiplizierers (4) angelegt sind, von dessen Ausgang (d) eine parabelförmige Fokussierspannung (Up) abgeleitet ist.

4. Schaltung nach Anspruch 2 und 3, **dadurch gekennzeichnet,** daß der Schalter (10) eine ODER-Schaltung (8 - 11) betätigt, die den Weg (f) der Fokussierspannung (UF) während der aktiven Bildzeit auf den Ausgang (d) des Multiplizierers (4) und während der Überschreibungszeiten auf eine Spannungsquelle (11) mit dem Gleichspannungswert (U11) schaltet.

5. Schaltung nach Anspruch 4, **dadurch gekennzeichnet,** daß der Ausgang (e) des Komparators (6) an die Basis eines Transistors (10) angeschlossen ist, dessen Kollektor mit der Spannungsquelle (11) mit dem Gleichspannungswert (U11) und dessen Emitter über eine Diode (12) mit einem Schaltungspunkt (f) verbunden ist, der über eine weitere Diode (8) an den Ausgang (d) des Multiplizierers (4) angeschlossen ist.

## Claims

1. Circuit for generating a dynamic focussing voltage in a television set having differing operating modes using overscanning of the screen wherein the focussing voltage is not effective during the overscanning periods, characterised in that, the focussing voltage is switched during the overscanning periods (0 - t1; t2 - T) to a direct voltage value (U11) which is dimensioned such that the arithmetic mean of the focussing voltage (UF) is the same for all the operating modes.

2. Circuit in accordance with Claim 1, **characterised in that,** the focussing voltage (UF) and a reference voltage (U7) having the lowermost value of the focussing voltage are applied to the inputs of a comparator (6) whose output voltage actuates a switch (10) for switching over to the direct voltage value (U11).

3. Circuit in accordance with Claim 1, **characterised in that,** a saw-tooth voltage (Uz) having the sweep period (T) is applied first directly, and then via a low pass filter (2, 3) delivering its direct voltage value, to the inputs (b, c) of a multiplier (4) from whose output (d) a parabolic focussing voltage (Up) is derived.

4. Circuit in accordance with Claim 2 and 3, **characterised in that,** the switch (10) actuates an OR circuit (8 - 11) which switches the path (f) of the focussing voltage (UF) to the output (d) of the multiplier (4) during the active picture period and to a voltage source (11) having the direct voltage value (U11) during the overscanning periods.

5. Circuit in accordance with Claim 4, **characterised in that,** the output (e) of the comparator (6) is connected to the base of a transistor (10) whose collector is connected to the voltage source (11) having the direct voltage value (U11) and whose emitter is connected via a diode (12) to a circuit point (f) which is connected via a further diode (8) to the output (d) of the multiplier (4).

## Revendications

1. Circuit pour la production d'une tension de focalisation dynamique (UF) dans un appareil de télévision fonctionnant selon un mode différent du mode de fonctionnement normal, dans lequel la période de balayage efficace pour la reproduction de l'image, pour le balayage par ligne et/ou pour le balayage vertical, est modifiée et le faisceau électronique est dévié pendant des temps dits de débordement au-delà des bords de l'écran, où la tension de focalisation présente la même amplitude crête-à-crête dans tous les modes de fonctionnement et n'est pas active pendant les temps de débordement en raison de la position du faisceau en dehors de l'écran, **caractérisé** par un équipement (4, 6, 10) pour commuter la tension de focalisation pendant les temps de débordement (0 - t1; t2 - T) sur une valeur de tension continue U11 déterminée de façon à ce que la valeur arithmétique moyenne de la tension de focalisation (UF) reste la même dans tous les modes de fonctionnement.

2. Circuit selon la revendication 1, **caractérisé en ce que** la tension de focalisation (UF) et une tension de référence (U7) ayant pour valeur la valeur inférieure de la tension de focalisation sont amenées à l'entrée d'un comparateur (6), dont la tension de sortie actionne un commutateur (10) pour commuter sur la valeur de la tension continue (U11).

3. Circuit selon la revendication 1, **caractérisé en ce qu'** une tension en dents de scie (Uz) ayant une période de balayage (T) et une tension continue fournie à partir de Uz par un filtre à basse fréquence (2, 3) sont amenées aux entrées (b, c) d'un multiplicateur (4), dont la sortie d délivre une tension de focalisation de forme parabolique (Up).

4. Circuit selon les revendications 2 et 3, **caractérisé en ce que** l'interrupteur (10) actionne un circuit OU (8 - 11), qui connecte le trajet (f) de la tension de focalisation (UF) sur la sortie (d) du multiplicateur (4) pendant la période active de production d'image et sur une source de tension (11) délivrant une tension continue (U11) pendant le temps de débordement.

5. Circuit selon la revendication 4, **caractérisé en ce que** la sortie e du comparateur (6) est connectée à la base d'un transistor (10), dont le collecteur est raccordé à la source de tension (11) délivrant la tension continue (U11) et dont l'émetteur est raccordé par l'intermédiaire d'une diode (12) à un point f du circuit, qui est connecté à une sortie (d) du multiplicateur (4).
